# EUROPEAN PATENT APPLICATION

(11) **EP 2 760 104 A1**
(43) Date of publication of application: **30.07.2014**
(21) Application number: 11856620.7
(22) Date of filing: 21.09.2011
(51) Int. Cl.: H02J 7/02, B60L 11/18, H02H 3/16, H02J 7/00

(54) **CHARGING SYSTEM FOR ELECTRIC VEHICLE AND CHARGING CONTROL METHOD**

(71) Applicant: Toyota Jidosha Kabushiki Kaisha, Toyota-shi, Aichi 471-8571 (JP)
(72) Inventor: SUGIYAMA, Yoshinobu, Toyota-shi Aichi 471-8571 (JP); OKI, Ryoji, Toyota-shi Aichi 471-8571 (JP)
(74) Representative: TBK
(86) International application number: PCT/JP2011/071431
(87) International publication number: WO 2013/042216

(57) **Abstract**

A power storage device (100) mounted on an electric powered vehicle is configured to include a plurality of battery units (BU1, BU2). A charger (200) outputs onto power lines (PL1, PL2) the charging power for charging the power storage device (100) by a power supply (402) external to the vehicle. A plurality of relays (SMRB1, SMRB2, SMRG1, SMRG2, SMRP1, SMRP2, CHR1, CHR2) switch the electrical connection between the power lines (PL1, PL2) and the plurality of battery units (BU1, BU2). A control device (50) controls the plurality of relays (SMRB1, SMRB2, SMRG1, SMRG2, SMRP1, SMRP2, CHR1, CHR2) to reduce the number of battery units that are the subject of charging when the current leakage value during overall charging of the plurality of battery units (BU1, BU2) is high.

## Description

### TECHNICAL FIELD

The present invention relates to a charging system and a charging control method of an electric powered vehicle. More particularly, the present invention relates to control of charging a vehicle-mounted power storage device through electric power from a power supply external to the vehicle.

### BACKGROUND ART

In recent years, an electric powered vehicle such as an electric car, hybrid vehicle, fuel cell vehicle and the like are attracting attention as environmental-friendly vehicles. Such electric powered vehicles employ an electric motor that generates the driving force of the vehicle, and a power storage device that stores the electric power supplied to the electric motor. A hybrid vehicle further has an internal combustion engine incorporated as a power source, in addition to an electric motor. A fuel cell vehicle has a fuel cell incorporated as the DC power supply for driving the vehicle.

In such electric powered vehicles, there is known a configuration of a vehicle-mounted power storage device allowing charging from a power supply external to the vehicle (hereinafter, also simply referred to as "external power supply"), for example, from a general household power supply. By connecting the plug socket located at an establishment with the charging inlet of the vehicle by a charge cable, for example, the power storage device can be charged from a general household power supply. Hereinafter, charging a vehicle-mounted power storage device through an external power supply is also simply referred to as "external charging".

Japanese Patent Laying-Open No. 2010-98845 (PTL 1) discloses control for accommodating the case where electrical leakage occurs during external charging. Specifically, the publication discloses stopping the charger when an electrical leakage detection device detects the possibility of electrical leakage during external charging of a vehicle-mounted power storage device.

### CITATION LIST

### PATENT LITERATURE

PTL 1: Japanese Patent Laying-Open No. 2010-98845

### SUMMARY OF INVENTION

### TECHNICAL PROBLEM

During external charging, current leakage varies according to the floating capacitance of the power storage device that is being charged. The floating capacitance also varies depending upon the environmental conditions during external charging. For example, under high temperature or high humidity, increase in the floating capacitance during charging is apt to increase the current leakage as compared to a normal state.

For the purpose of increasing the travel distance of an electric powered vehicle through the stored energy in the power storage device, the trend is towards increasing the capacitance of the vehicle-mounted power storage device. In such electric powered vehicles, the current leakage during external charging is increased by the larger floating capacitance of the power storage device that is the subject of charging.

If the control disclosed in PTL 1 is applied to such a configuration, there is the possibility of increasing the frequency of charging being forced to stop according to the value of current leakage during external charging. For example, there is a possibility of not being able to sufficiently ensure the charging opportunity for the power storage device due to the increase of current leakage caused by greater floating capacitance in a high temperature/high humidity state.

In view of the foregoing, an object of the present invention is to achieve compatibility between safety measures for current leakage and ensuring charging opportunity in an electric powered vehicle that has a power storage device including a plurality of battery units externally charged.

### SOLUTION TO PROBLEM

According to an aspect of the present invention, a charging system of an electric powered vehicle incorporating a traction electric motor includes a power storage device for storing charging electric power to be supplied to the traction electric motor, first and second power lines, a plurality of open/close devices, a detector, and a control unit. The power storage device is configured to include a plurality of power storage units. The first and second power lines are configured to receive charging power to charge the power storage device. The plurality of open/close devices are configured to switch electrical connection between the first and second power lines and the plurality of power storage units. The detector is configured to detect current leakage during charging of the power storage device. The control unit controls the plurality of open/close devices to modify the number of power storage unit(s) connected to the first and second power lines among the plurality of power storage units according to the current leakage detection value by the detector during charging of the power storage device.

Preferably, the control unit controls the plurality of open/close devices to attain, when the current leakage detection value exceeds a reference value during charging of the power storage device under a first state where a first number of power storage units among the plurality of power storage units are electrically connected to the first and second power lines, a second state where a second number of power storage unit(s), fewer than the first number, is/are electrically connected to the first and second power lines, and charges the power storage device under the second state.

Preferably, the control unit controls the plurality of open/close devices to attain, when the current leakage detection value exceeds a reference value during charging of the power storage device under a first state where all the plurality of power storage units are electrically connected to the first and second power lines, a second state where a subset of the plurality of power storage units is electrically connected to the first and second power lines, and charges the power storage device under the second state.

Further preferably, the control unit controls the plurality of open/close devices to change from the first state to the second state after the charging power of the power storage device is set to zero under the first state.

Further preferably, the electric powered vehicle further includes a charger. The charger is configured to convert the electric power from a power supply external to the electric powered vehicle into charging power of the power storage device for output onto the first and second power lines. The plurality of power storage units are electrically connected in parallel with the first and second power lines under the first state. The output voltage from the charger is equal in the first and second states.

Alternatively and preferably, the electric powered vehicle further includes a charger. The charger is configured to convert the electric power from a power supply external to the electric powered vehicle into charging power of the power storage device for output onto the first and second power lines. The plurality of power storage units are electrically connected in series with the first and second power lines under the first state. The output voltage from the charger under the second state is lower than the output voltage from the charger under the first state.

Also preferably, the electric powered vehicle further includes a charger. The charger is configured to convert the electric power from a power supply external to the electric powered vehicle into charging power of the power storage device for output onto the first and second power lines. The charger is constituted of a non-insulation type power converter.

Alternatively and preferably, the electric powered vehicle further includes a power control unit and a charger. The power control unit is configured to execute power conversion between the traction electric motor and the power storage device of the electric powered vehicle. The charger is configured to convert the electric power from a power supply external to the electric powered vehicle into charging power of the power storage device for output onto the first and second power lines. The charger is at least partially configured sharing circuitry with the power control unit.

Another aspect of the present invention is directed to a charging control method of an electric powered vehicle incorporating a traction electric motor and a power storage device for storing electric power to be supplied to the traction electric motor. The power storage device is configured to include a plurality of power storage units. The charging control method includes the steps of detecting current leakage during charging of the power storage device, and charging the power storage device having modified the number of power storage unit(s) connected to first and second power lines to which charging power for charging the power storage device is supplied according to the detected current leakage detection value.

Preferably in the detecting step, the current leakage detection value is detected during charging under a first state where a first number of power storage units among the plurality of power storage units are electrically connected to the first and second power lines. In the charging step, when the current leakage detection value exceeds a reference value under the first state, the power storage device is charged under a second state where a second number of power storage unit(s), fewer than the first number, is/are electrically connected to the first and second power lines.

Further preferably in the detecting step, the current leakage detection value is detected during charging under the first state where all the plurality of power storage units are electrically connected to the first and second power lines. In the charging step, when the current leakage detection value under the first state exceeds the reference value, the power storage device is charged under a second state where a subset of the plurality of power storage units is electrically connected to the first and second power lines.

Preferably, the control method further includes the step of setting the charging power of the power storage device at zero, prior to switching connection between the plurality of power storage units and the first and second power lines so as to change from the first state to the second state.

### ADVANTAGEOUS EFFECTS OF INVENTION

According to the present invention, a vehicle-mounted power storage device can be charged appropriately, achieving compatibility between safety measures against current leakage and ensuring charging opportunity in an electric powered vehicle having a power storage device including a plurality of battery units externally charged.

### BRIEF DESCRIPTION OF DRAWINGS

Fig. 1 schematically represents a configuration of a charging system of an electric powered vehicle according to an embodiment of the present invention.
Fig. 2 is a circuit diagram representing an exemplified configuration of the charger shown in Fig. 1.
Fig. 3 schematically represents a configuration of a traction system of an electric powered vehicle.
Fig. 4 schematically represents a configuration of the connection between the charging inlet and charge cable shown in Fig. 1.
Fig. 5 is a schematic diagram to describe an exemplified configuration of a current leakage detection circuit.
Fig. 6 is a first flowchart describing a control procedure of external charging at a charging system of an electric powered vehicle according to an embodiment of the present invention.
Fig. 7 is a second flowchart describing a control procedure of external charging at a charging system of an electric powered vehicle according to an embodiment of the present invention.
Fig. 8 is a third flowchart describing a control procedure of external charging at a charging system of an electric powered vehicle according to an embodiment of the present invention.
Fig. 9 is a schematic diagram of an exemplified configuration of a power storage device in a charging system of an electric powered vehicle according to a modification of an embodiment of the present invention.
Fig. 10 is a first flowchart describing a control procedure of external charging of the power storage device shown in Fig. 9.
Fig. 11 is a second flowchart describing a control procedure of external charging of the power storage device shown in Fig. 9.

### DESCRIPTION OF EMBODIMENTS

Embodiments of the present invention will be described hereinafter in detail with reference to the drawings. In the following, the same or corresponding elements in the drawings have the same reference characters allotted, and description thereof will basically be not repeated.

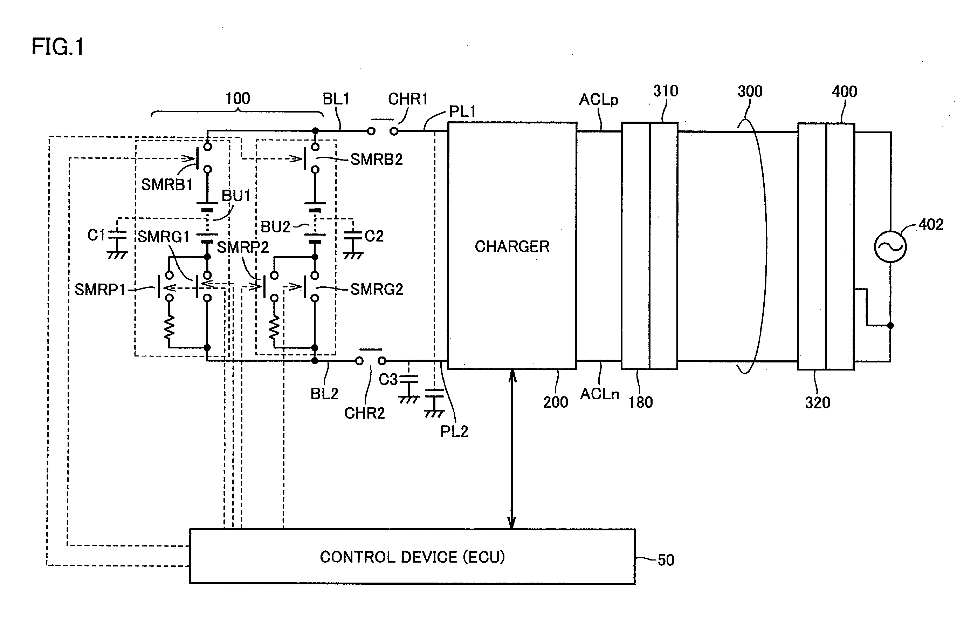

Fig. 1 schematically represents a configuration of a charging system of an electric powered vehicle according to an embodiment of the present invention. In Fig. 1, the configuration for external-charging of a power storage device 100 in the electric powered vehicle is mainly shown.

Referring to Fig. 1, the charging system of an electric powered vehicle includes a control device 50, a power storage device 100, a charging inlet 180, and a charger 200.

Control device 50 is constituted of an electronic control unit (ECU) incorporating a CPU (Central Processing Unit) and a memory not shown. The ECU is configured to carry out operation using a detection value by each sensor based on a map and program stored in the relevant memory. Alternatively, at least a portion of the ECU may be configured to execute a predetermined numeric value/logic operation by hardware such as electronic circuitry and the like.

In an external charging mode, charging inlet 180 is electrically connected with a plug socket 400 of an external power supply 402 via a charge cable 300. Specifically, electric power from external power supply 402 is supplied to charging inlet 180 by the electrical connection between a connector 310 of charge cable 300 and charging inlet 180 of the electric powered vehicle, and between a plug 320 of charge cable 300 with plug socket 400.

Although the present embodiment is described based on the so-called plug-in type electric powered vehicle, envisaging a system AC power supply for external power supply 402, the application of the present invention is not limited thereto. For example, the external power supply may be a power source that supplies DC power such as a solar cell or domestic battery. Alternatively, the electric powered vehicle may be configured to receive supply of electric power from an external power supply in a non-contact manner by electromagnetic coupling or magnetic resonance without the usage of charge cable 300. In other words, it is intended that application of the present invention is allowed for all general electric powered vehicles capable of external-charging.

Charging inlet 180 is electrically connected to power lines ACLp and ACLn. In an external charging mode, the electric power from external power supply 402 is transmitted onto power lines ACLp and ACLn.

Charger 200 converts the electric power transmitted onto power lines ACLp and ACLn from external power supply 402 into the charging power of power storage device 100 for output onto power lines PL1 and PL2.

Power storage device 100 includes a plurality of power storage units BU1 and BU2. Power storage units BU1 and BU2 are constituted of a secondary battery capable of recharging such as a lithium ion battery or nickel-metal battery. Hereinafter, battery units BU1 and BU2 are also referred to as battery units BU1, BU2. Power storage units BU1 and BU2 may be configured by power storage elements other than a secondary battery.

Power storage device 100 is electrically connected to power lines BL1 and BL2. A relay SMRB1 is electrically connected between power line BL1 and the positive terminal of battery unit BU1. Similarly, a relay SMRB1 is electrically connected between the negative terminal of battery unit BU1 and power line BL2.

A relay SMRP1 having a limiting resistor for suppressing current is preferably arranged parallel to relay SMRG1. At the initial stage of the period during which relay SMRB1 is to be ON for connecting the negative terminal of battery unit BU1 and power line BL2, relay SMRP1 is turned on instead of relay SMRB1 to suppress inrush current. In other words, the negative terminal of battery unit BU1 is electrically connected with power line BL2 in the ON period of relay SMRB1 and the ON period of relay SMRP 1. Therefore, the ON of relay SMRB1 and the ON of relay SMRP1 will be generically referred to simply as the ON of relay SMRB1 without discrimination therebetween hereinafter.

Similarly, relays SMRB2 and SMRG2 are provided with respect to battery unit BU2. Preferably, relay SMRP2 for suppressing inrush current is provided parallel to relay SMRG2. The ON of both relays SMRB2 and SMRP2 will be generically referred to simply as the ON of SMRB2.

For example, battery unit BU1 and relays SMRB1, SMRG1 and SMRP1 are stored in the same battery pack. Similarly, battery unit BU2 and relays SMRB2, SMRG2, and SMRP2 are stored in the same battery pack.

A relay CHR1 is provided between power lines PL1 and BL1. A relay CHR2 is provided between power lines PL2 and BL2. By setting relays CHR1 and CHR2 ON in an external charging mode, power lines BL1 and BL2 are electrically connected to power lines PL1 and PL2. As a result, battery unit BU1 and/or BU2 electrically connected with power lines PL1 and PL2 via power lines BL1 and BL2 are external-charged by charger 200.

These relays SMRB1, SMRB2, SMRG1, SMRP1, SMRG2, SMRP2, CHR1 and CHR2 correspond to "a plurality of open/close devices" directed to switching the electrical connection between power lines PL1, PL2 and plurality of battery units BU1, BU2. The on/off of each relay is controlled by control device 50.

Each relay is typically constituted of an electromagnetic relay that is closed (ON) when exciting current is supplied by an exciting circuit not shown and open (OFF) when exciting current is not supplied. It is to be noted that an arbitrary circuit element may be employed instead of the relay as long as the open/close device can control the connection (ON)/breaking (OFF) of the conduction path.

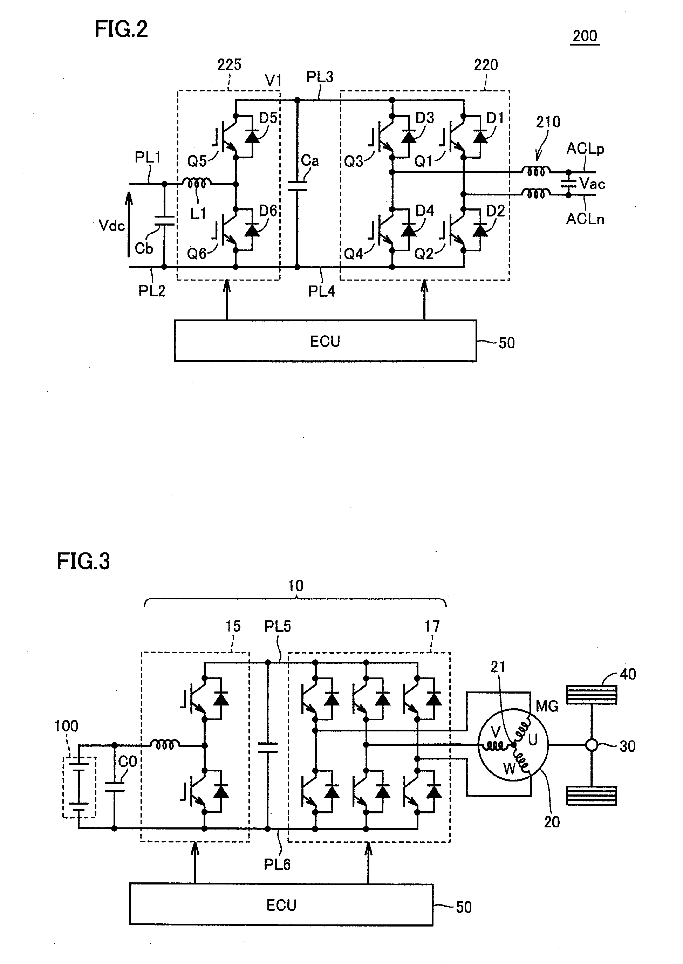

Fig. 2 is a circuit diagram describing an exemplified configuration of charger 200.

Referring to Fig. 2, charger 200 includes an LC filter 210, an AC/DC converter 220, a DC/DC converter 225, and smoothing capacitors Ca and Cb.

LC filter 210 is inserted and connected to power lines ACLp and ACLn to remove the higher harmonic component of the AC voltage (Vac). AC/DC converter 220 is provided between power lines ACLp, ACLn and power lines PL3, PL4. Smoothing capacitor Ca is connected to power lines PL3 and PL4. DC/DC converter 225 is provided between power lines PL1, PL2 and power lines PL3, PL4. Smoothing capacitor Cb is connected to power lines PL1 and PL2.

AC/DC converter 220 includes power semiconductor switching elements Q1-Q4. Anti-parallel diodes D1-D4 are connected to switching elements Q1-Q4, respectively. In the present embodiment, an IGBT (Insulated Gate Bipolar Transistor) is exemplified as a power semiconductor switching element (hereinafter, also referred simply as "switching element" hereinafter). An arbitrary element capable of controlling on/off such as a power MOS (Metal Oxide Semiconductor) transistor or power bipolar transistor may be appropriately employed.

Switching elements Q1-Q4 constitute a full bridge circuit between power lines ACLp, ACLn and power lines PL3, PL4. The full bridge circuit can execute AC/DC power conversion bidirectionally through the ON/OFF control of switching elements Q1-Q4, as well known. It is also known that the level of DC voltage (current) or AC voltage (current) can be controlled by regulating the duty ratio of switching elements in ON/OFF control. The ON/OFF of switching elements Q1-Q4 is controlled in response to a control signal from control device 50.

DC/DC converter 225 is formed of, for example, a non-insulation type chopper circuit. DC/DC converter 225 includes switching elements Q5 and Q6 and a reactor L1. Anti-parallel diodes D5 and D6 are connected to switching elements Q5 and Q6, respectively. DC/DC converter 225 can execute DC voltage conversion bidirectionally between power lines PL1, PL2 and power lines PL3, PL4.

In an external charging mode, AC voltage Vac from external power supply 402 has the higher harmonic component removed by LC filter 210 and applied to AC/DC converter 220. AC/DC converter 220 converts AC voltage Vac into DC voltage V1 for output onto power lines PL3 and PL4.

DC/DC converter 225 converts the DC voltage V1 of power lines PL3, PL4 into charge voltage Vdc of power storage device 100 and provides the converted voltage onto power lines PL1 and PL2. By AC/DC converter 220 and DC/DC converter 225, the charging power output onto power lines PL1, PL2 can be controlled.

In the example of Fig. 2, charger 200 is configured as a non-insulation type power conversion circuit. The non-insulation type power conversion circuit tends to be superior in efficiency as compared to an insulation type power conversion circuit configured including an insulation transformer. The circuit configuration of charger 200 can be set arbitrarily as long as the electric power from the external power supply can be converted into charging power for the power storage device in the application of the present invention.

Fig. 3 is a schematic configuration of the traction system of the electric powered vehicle.

Referring to Fig. 3, the electric powered vehicle includes a power control unit 10, a motor generator 20 generating the vehicle driving force, a power transmission gear 30, and a driving wheel 40.

In a running mode, power storage device 100 is electrically connected with power control unit 10. At the input side of power control unit 10 (side of power storage device 100), smoothing capacitor Co is electrically connected parallel to power storage device 100.

Power control unit 10 can convert the power from power storage device 100 for controlling the driving of motor generator 20. For example, motor generator 20 is formed of a permanent magnet type 3-phase synchronizing electric motor having three phase windings connected at neutral point 21. Motor generator 20 corresponds to "traction electric motor".

Power control unit 10 includes a boost converter 15 and a 3-phase inverter 17.

Boost converter 15 executes DC voltage conversion bidirectionally between the output voltage of power storage device 100 and the DC voltage of power lines PL5, PL6. For example, boost converter 15 is formed of a chopper circuit similar to DC/DC converter 225 of Fig. 2. A smoothing capacitor is connected to power lines PL5, PL6.

Inverter 17 is formed of a general 3-phase inverter. Inverter 17 converts the DC voltage of power lines PL5 and PL6 into AC voltage that is applied to each phase of motor generator 20. Accordingly, the output torque of motor generator 20 is controlled.

The output torque of motor generator 20 is transmitted to driving wheel 40 via power transmission gear 30 constituted of a reduction gear and/or power split mechanism. Accordingly, the electric powered vehicle can run by the output torque of motor generator 20 generated using the electric power supplied from power storage device 100. Particularly, by providing boost converter 15, motor generator 20 can be drive-controlled using AC voltage having amplitude greater than that of the output voltage from power storage device 100.

In a regenerative braking mode of the electric powered vehicle, motor generator 20 can generate power by the torque of driving wheel 40. The electric power generated by regeneration is converted into the charging power for power storage device 100 by power control unit 10.

In a hybrid vehicle having an engine (not shown) incorporated in addition to motor generator 20, the driving power required for the electric powered vehicle can be generated by operating the engine and motor generator 20 in cooperation. In this operation, power storage device 100 can also be charged using the power generated by the rotation of the engine. Thus, an electric powered vehicle generically refers to a vehicle incorporating a traction electric motor, and includes a hybrid vehicle generating the driving force by an engine and electric motor, an electric vehicle not incorporating an engine, a fuel cell vehicle, and the like.

As shown in Fig. 3, boost converter 15 may have a circuit configuration similar to that of DC/DC converter 225 shown in Fig. 2. In this case, DC/DC converter 225 of charger 200 shown in Fig. 2 can be shared with a part of circuitry (boost converter 15) of the traction system. As such, the relay (not shown) is to be arranged such that output voltage V1 of AC/DC converter 220 is transmitted onto power lines PL5 and PL6 during external charging.

Alternatively, as shown in Fig. 14 of PTL 1, an electric powered vehicle incorporating a plurality of motor generators may share the entire configuration of charger 200 with the circuitry of the traction system by a configuration in which an external power supply is connected to the neutral point of two motor generators. Thus, for charger 200 and the traction system circuitry, an arbitrary circuit configuration can be applied as long as a function similar to that set forth above is exhibited.

Referring to Fig. 1 again, in the case where the entirety of power storage device 100 is charged by charger 200, the sum of the earth capacitance C1 of battery unit BU1, the earth capacitance C2 of battery unit BU2, and the earth capacitance C3 of power lines PL1, PL2, i.e. (C1+C2+C3), acts as the floating capacitance on the charging path.

In an external charging mode, current leakage flows through this floating capacitance. Therefore, if power storage device 100 is increased in capacitance to increase the travel distance of the electric powered vehicle, the current leakage will also be increased since (C1+C2) becomes larger. As disclosed in PTL 1, external-charging is preferably stopped from the standpoint of safety when the current leakage exceeds a predetermined reference value. Increase in the current leakage due to the floating capacitance is apt to be significant when using a non-insulation type charger.

There is a concern that the frequency of the current leakage arriving at the aforementioned reference value will be increased depending on the environment conditions and the like since the current leakage becomes relatively great in a power storage device 100 of large capacitance. Therefore, if external-charging is completely prohibited when the charging current exceeds the reference value, there is a possibility of difficulty in ensuring the charging opportunity for power storage device 100.

In the charging system of an electric powered vehicle according to the present embodiment, control of switching the number of battery units that will be the subject of charging in power storage device 100 is executed according to the detection value of current leakage.

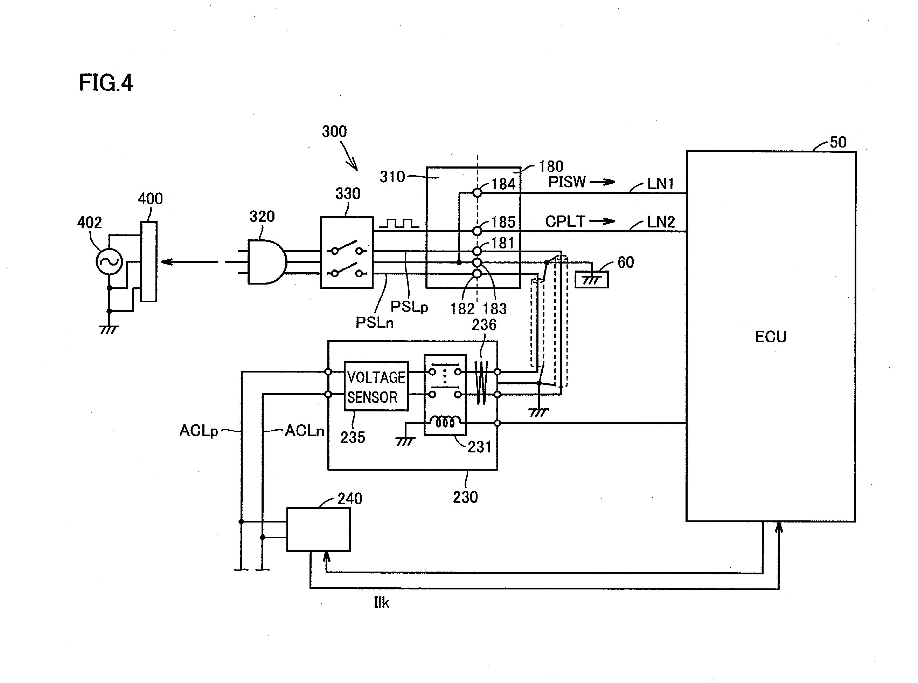

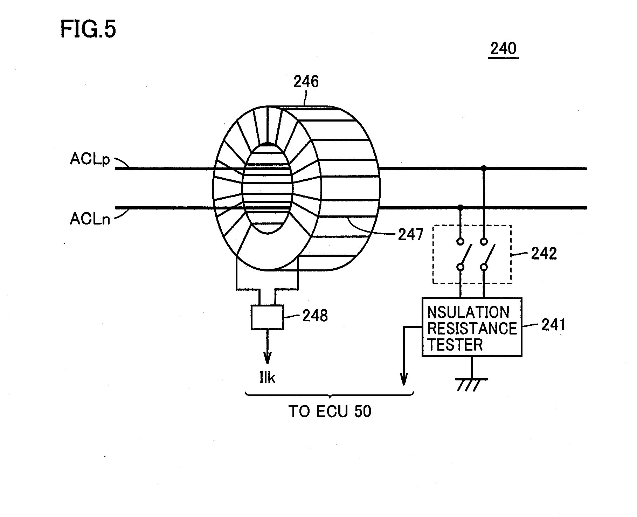

First, an exemplified configuration of detecting current leakage will be described based on Figs. 4 and 5.

Fig. 4 schematically represents a configuration of the connection region between charging inlet 180 and charge cable 300.

Referring to Fig. 4, charge cable 300 connecting an electric powered vehicle with external power supply 402 includes a connector 310, a plug 320, and a CCID (Charging Circuit Interrupt Device) 330.

Connector 310 is configured to allow connection with a charging inlet 180 provided at the electric powered vehicle. When connector 310 is connected with charging inlet 180, a signal PISW indicating the connection thereof is applied to control device 50 via a signal line LN1.

Signal line LN1 is connected to an electrode 184, and an electrode 183 is connected to vehicle earth 60. When connector 310 is connected to charging inlet 180, signal line LN1 is connected to vehicle earth 60 by the short-circuiting of electrodes 183 and 184. Accordingly, signal PISW attains ground potential. When connector 310 is detached from charging inlet 180, signal line LN1 is electrically open. Therefore, based on the potential of signal PISW, control device 50 can identify whether connector 310 and charging inlet 180 are connected or not.

Plug 320 is connected to a plug socket 400 provided at an establishment, for example. AC power is supplied from external power supply 402 to plug socket 400.

CCID 330 is inserted to a pair of power lines (power lines PSLp, PSLn) to supply charging power to the electric powered vehicle from external power supply 402 to control the connection/disconnection of the power transmission path from external power supply 402 to the electric powered vehicle.

When plug 320 is connected to plug socket 400, CCID 330 is operated by the electric power supplied from external power supply 402 to generate a pilot signal CPLT. Pilot signal CPLT is applied to control device 50 via a signal line LN2 connected to electrode 185. CCID 330 sets the duty cycle of pilot signal CPLT based on the rated current that can be supplied to the electric powered vehicle from external power supply 402 through charge cable 300. Therefore, control device 50 can identify the aforementioned rated current by receiving pilot signal CPLT.

An AC port 230 is connected between charging inlet 180 and power lines ACLp, ACLn to control the electrical connection/disconnection therebetween. AC port 230 includes a DFR (Dead Front Relay) 231, a voltage sensor 235, and a current sensor 236.

DFR 231 is ON/OFF controlled by a control signal from control device 50.
When DFR 231 is OFF, power lines ACLp and ACLn can be electrically disconnected from charging inlet 180. In contrast, when DFR 231 is ON, power lines ACLp and ACLn are electrically connected with charging inlet 180. In a charging mode of power storage device 100 by external power supply 402, DFR 231 is rendered ON by control device 50. When the electric powered vehicle is not electrically connected with an external power supply 402, DFR 231 is rendered OFF by control device 50.

Voltage sensor 235 detects the voltage between power lines ACLp and ACLn. Current sensor 236 detects the current flowing from charging inlet 180 to power lines ACLp and ACLn.

Current leakage detection circuit 240 is connected to power lines ACLp and ACLn to detect current leakage during external charging. Current leakage detection circuit 240 outputs the detected current leakage value Ilk to control device 50 in an external charging mode. Control device 50 can detect the possibility of current leakage based on current leakage value Ilk. Alternatively, current leakage detection circuit 240 may deliver a signal indicating whether current leakage value Ilk has exceeded a predetermined reference value It to control device 50.

The configuration of current-leakage detection circuit 240 is not particularly limited, and the configuration shown in Fig. 5, for example, may be employed.

Referring to Fig. 5, current leakage detection circuit 240 includes an insulation resistance tester 241, a connection unit 242, a flux concentrating core 246, a coil 247, and a current detector 248.

During a non-charging mode of power storage device 100, insulation resistance tester 241 detects whether each of power lines ACLp and ACLn is insulated from vehicle earth 60, and whether power lines ACLp and ACLn are insulated from each other. The result of detection is output to control device 50.

Connection unit 242 functions to connect or disconnect insulation resistance tester 241 to or from power lines ACLp and ACLn under control of control device 50. For example, connection unit 242 is OFF when charge cable 300 is connected to the electric powered vehicle, and ON when charge cable 300 is connected to the electric powered vehicle.

Flux concentrating core 246, coil 247 and current detector 248 are used in an external charging mode of power storage device 100. Flux concentrating core 246 gathers the flux generated in the surrounding according to the current flowing through power lines ACLp and ACLn. Coil 247 is wound around flux concentrating core 246. Current detector 248 is connected across coil 247.

In the state where current leakage occurs, the balance between the flux generated by the current flowing through power line ACLp and the flux generated by the current flowing through power line ACLn is broken, causing the generation of flux at flux concentrating core 246. Voltage difference occurs at the two ends of coil 247 according to the generated flux. Therefore, current detector 248 outputs current leakage value Ilk based on the voltage difference between the two ends of coil 247. Alternatively, current detector 248 may output a signal indicating whether current leakage value Ilk has exceeded predetermined reference value It, as mentioned above.

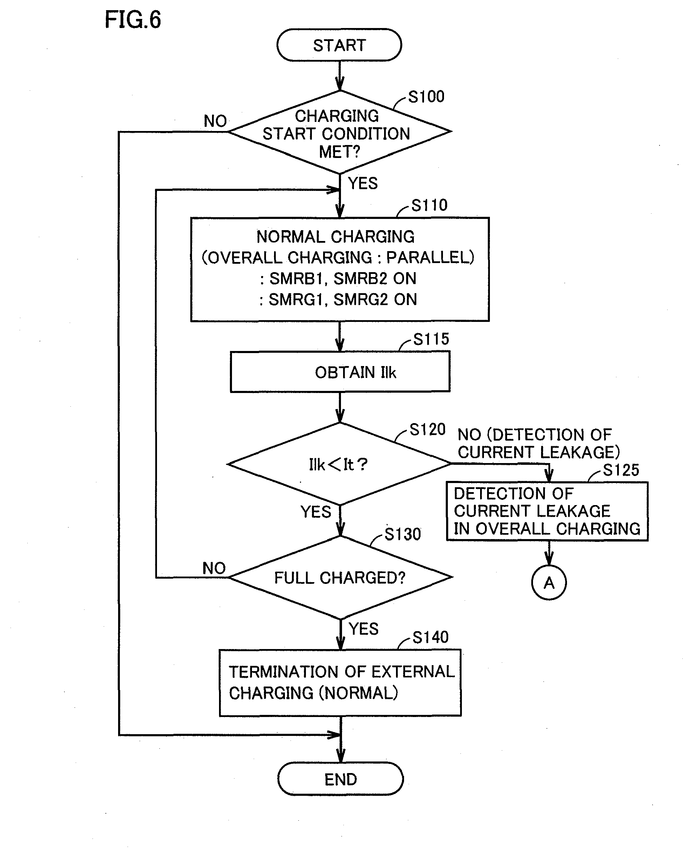

Charging control of power storage device 100 based on the current leakage value detected in an external charging mode will be described hereinafter with reference to the flowcharts of Figs. 6-8. The series of control processing according to the flowcharts of Figs. 6-8 set forth below are executed at a predetermined cycle by control device 50. The procedure of each step shown in Figs. 6-8 may be executed by hardware and/or software processing through control device 50.

Referring to Fig. 6, control device 50 determines whether the start condition of external charging is met or not at step S100. For example, when charge cable 300 is connected properly and external charging is designated by the user (including the arrival of a preset charging time), a YES determination is made at step S 100. When the charging start condition is not met (NO determination at S100), the process ends without executing the subsequent steps. In other words, external charging is not executed.

When the charging start condition is met (YES determination at S100), control device 50 designates normal charging at step S110. For example, in a normal charging mode, the entirety of power storage device 100, i.e. both battery units BU1 and BU2, are taken as the subject of charging and external-charged in parallel. Hereinafter, the normal charging according to step S110 is also referred to as "overall charging".

In overall charging, relays SMRB1, SMRB2 and relays SMRG1, SMRG2 are set ON, whereby external-charging by charger 200 is executed with battery units BU1 and BU2 electrically connected to power lines PL1 and PL2.

At step S115, control device 50 obtains a current leakage value Ilk during overall charging based on the detection value of current leakage detection circuit 240. Further, control device 50 compares current leakage value Ilk during overall charging with reference value It at step S120. Reference value It is determined in advance with a predetermined margin relative to the safety standards by regulations and the like.

In the event of current leakage value Ilk being lower than reference value It (YES determination at S120), control device 50 determines whether battery units BU1 and BU2 that are the charging subject have arrived at a full charged state at step S130 while continuing overall charging by step S110. Until battery units BU1 and BU2 that are the charging subject arrive at the full charged state (NO determination at S130), overall charging by step S110 is continued.

When battery units BU1 and BU2 arrive at the full charged state (YES determination at S130), control device 50 ends external-charging normally at step S140.

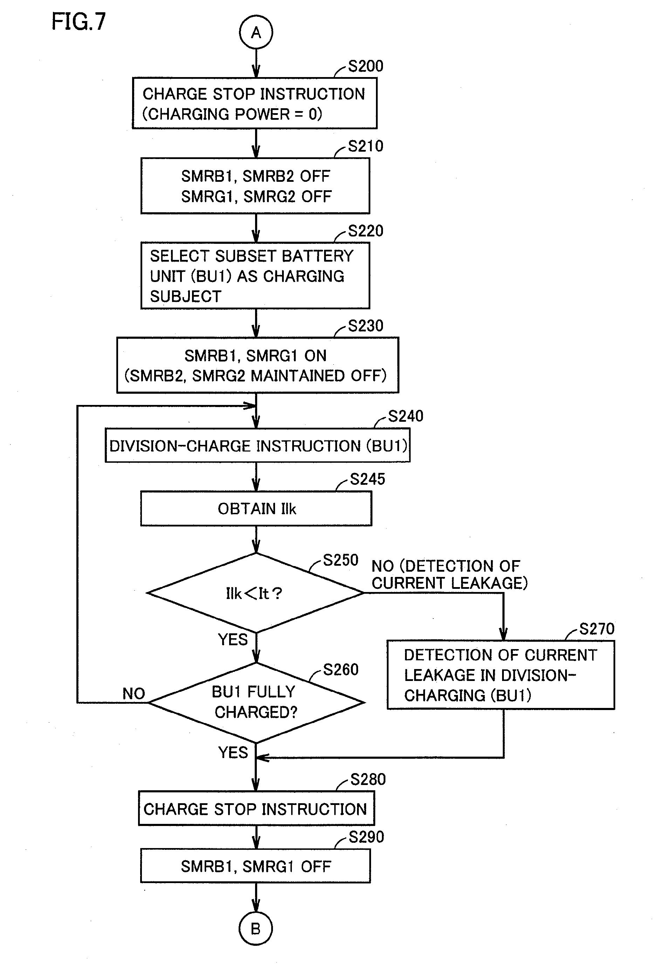

In the event of current leakage value Ilk exceeding reference value It during overall charging (NO determination at S120), control device 50 detects the current leakage in overall charging at step S125, and subsequently executes the procedure shown in the flowchart of Fig. 7.

Referring to Fig. 7, control device 50 generates a charge stop instruction at step S200. At step S200, the output electric power of charger 200 (charging power) is set at 0. In other words, the charging power of power storage device 100 is set at 0 while maintaining the ON state of relays CHR1 and CHR2.

At step S210, control device 50 turns relays SMRB1, SMRB2 and relays SMRG1, SMRG2 OFF under a state where power output from charger 200 is stopped. Accordingly, battery units BU1 and BU2 attain a state electrically disconnected from power lines PL1 and PL2 temporarily.

At step S220, control device 50 selects a subset of the battery units (herein, battery unit BU1) as the charging subject, and prepares for charging thereof. The selection of the subject of charging at step S220 may be made according to a predetermined constant pattern, or may be altered appropriately according to the current status.

At step S230, control device 50 turns relays SMRB1 and SMRG1 corresponding to battery unit BU1 that is the charging subject ON. Relays SMRB2 and SMRG2 corresponding to the other battery unit BU2 (non-charging subject) are maintained OFF. Accordingly, the state where only battery unit BU1 is connected to power lines PL1 and PL2 is established.

Control proceeds to step S240 where control device 50 generates a division-charge instruction with battery unit BU1 selected at step S200 as the subject of charging. Accordingly, in the state where subset battery unit BU1 is electrically connected to power lines PL1 and PL2, charger 200 outputs electric power for charging the subset of battery units.

At step S245, control device 50 obtains current leakage value Ilk during division-charging of battery unit BU1 based on the detection value from current leakage detection circuit 240. At step S250, control device 50 compares current leakage value Ilk during division-charging with reference value It.

When current leakage value Ilk during division-charging exceeds reference value It (NO determination at step S250), control device 50 detects current leakage in the division-charging of battery unit BU1 at step S270. Then, control proceeds to step S280 where control device 50 generates a charge stop instruction, likewise with step S200. In response, the charging of battery unit BU1 is immediately stopped.

When current leakage value Ilk is lower than reference value It (YES determination at S250), control device 50 determines whether battery unit BU1 that is the charging subject has arrived at a full charged state at step S260 while continuing the division-charging through step S240. Until battery unit BU1 arrives at a full charged state (NO determination at S260), the division-charging through step S240 is continued.

When battery unit BU1 that is the charging subject arrives at a full charged state (YES determination at step S260), control proceeds to step S280 where control device 50 generates a charge stop instruction, likewise with step S200. In response, the power output from charger 200 is stopped in a state where charging of battery unit BU1 is completed.

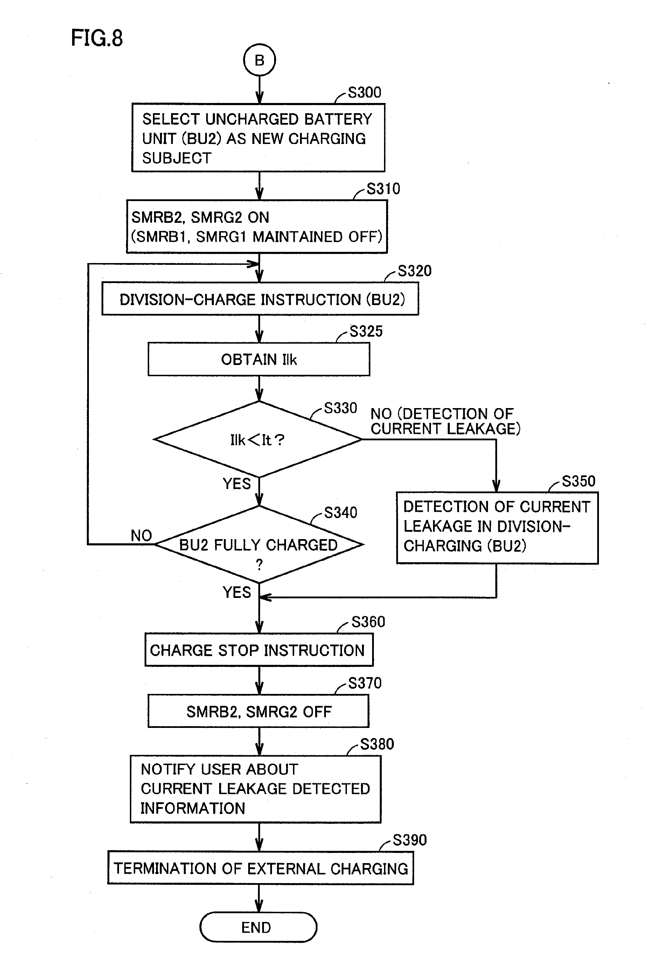

Under a state where power output from charger 200 is stopped through step S280, control device 50 turns relays SMRB1 and SMRG1 corresponding to battery unit BU1 OFF at step S290. Accordingly, both battery units BU1 and BU2 attain a state disconnected from power lines PL1 and PL2 at the end of step S290. Further, control device 50 executes the procedure indicated in the flowchart of Fig. 8.

Referring to Fig. 8, control device 50 selects the remaining battery unit that is not charged as the new subject of charging at step S300. Since power storage device 100 is constituted of two battery units BU1 and BU2 in the example of Fig. 1, the selection at step S300 is determined automatically in cooperation with the selection made at step S220 (Fig. 7). Here, battery unit BU2 is selected as the subject of charging.

Then, control device 50 executes division-charging with battery unit BU2 as the charging subject through steps S310-S360, likewise with steps S230-S290 of Fig. 7. Specifically, when current leakage value Ilk exceeds reference value It during division-charging of battery unit BU2 (NO determination at S330), detection of current leakage during charging of battery unit BU2 is made (S350), and the charging of battery unit BU2 is immediately stopped (S360).

At the end of step S360, the division-charging of battery unit BU2 has ended either by being forced to stop due to detection of current leakage or by a normal stop as a result of full charging. Further, control device 50 turns OFF relays SMRB2 and SMRG2 that were ON in division-charging (BU2). Thus, all the relays have been set OFF, whereby battery units BU1 and BU2 are electrically disconnected from power lines PL1 and PL2. Moreover, relays CHR1 and CHR2 are also set OFF since division-charging both has ended.

Upon the completion of division-charging with battery units BU1 and BU2 as each subject of charging, control device 50 notifies the user about the information related to the detection of current leakage at step S380. For example, when a NO determination is made at at least one of steps S120, S250 and S330, the user receives information indicating the detection of current leakage in overall charging, division charging (BU1) or division charging (BU2) through a diagnostic code or the like.

The user can obtain information about whether current leakage has been detected during external charging, and information indicating the battery unit whose charging has been completed at the end of external charging through step S380. Further, control device 50 terminates external charging at step S390.

The flowcharts of Figs. 7 and 8 correspond to an example of executing the process of temporarily stopping charging in turning the relay ON/OFF (S210, S320) for the purpose of modifying the connecting relationship of power lines PL1, PL2 and battery units BU1, BU2 during external charging. Although temporarily stopping charging is preferable from the standpoint of equipment protection, such a process may be omitted depending on the status such as when the charging current is significantly low relative to the rated current of the relay. In other words, the process of switching the battery unit that is to be the subject of charging by controlling the opening/closing of the relay is possible with the charging continued during external charging.

Thus, the charging system of the electric powered vehicle of the present invention allows external charging of a power storage device constituted of a plurality of battery units to be continued, even in the case where the current leakage during normal charging (overall charging) is great, by virtue of division-charging in which the number of battery units that is the subject of charging is reduced without having to force termination of external charging per se. Accordingly, each battery unit can be sequentially charged in the case where current leakage is increasing due to a larger floating capacitance.

By ensuring the charging opportunity of each battery unit upon avoiding charging in a state where the current leakage is greater than a reference value in view of safety measurements, power storage device 100 can be external-charged appropriately.

### [Modification of Embodiment]

Fig. 1 was described based on an exemplified configuration of power storage device 100 including a plurality of battery units BU1 and BU2 connected in parallel. An exemplified modification of power storage device 100 having a plurality of battery units BU1 and BU2 connected in series will be described hereinafter.

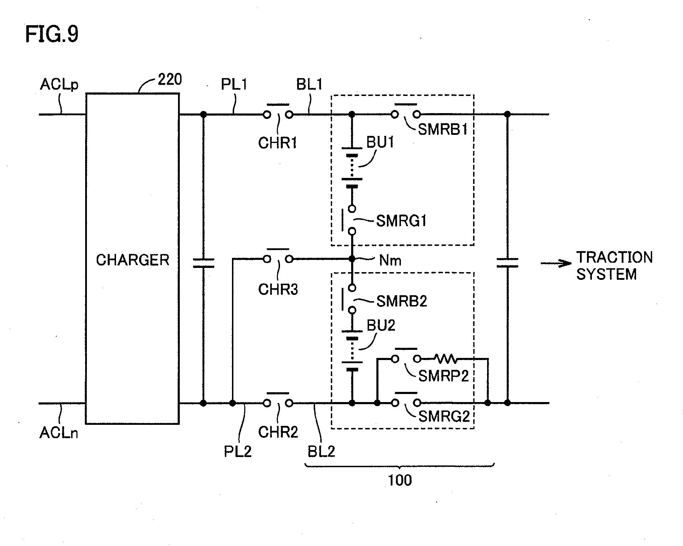

The configuration of the charging system of an electric powered vehicle according to a modification of the embodiment shown in Fig. 9 is likewise with that of Fig. 1 except for power storage device 100 and the relay arrangement between power storage device 100 and charger 200. Therefore, only the section differing in configuration from that of Fig. 1 will be described hereinafter. Elements common to those in Figs. 1-8 will not be repeated.

Referring to Fig. 9, power storage device 100 includes battery units BU1 and BU2 electrically connected in series via an intermediate node Nm between power lines BL1 and BL2. Intermediate node Nm corresponds to the electrical connection node of battery units BU1 and BU2.

For example, battery unit BU1 and relays SMRB1 and SMRG1 are stored in the same battery pack. Similarly, battery unit BU2 and relays SMRB2, SMRG2 and SMRP2 are stored in the same battery pack.

Relay SMRG1 is provided between the negative terminal of battery unit BU1 and intermediate node Nm. Similarly, relay SMRB2 is provided between the positive terminal of battery unit BU2 and intermediate node Nm.

The positive terminal of battery unit BU1 is electrically connected to power line BL1. A negative terminal of battery unit BU2 is electrically connected to power line BL2.

To control the connection between power storage device 100 and traction system circuitry (Fig. 3), relay SMRB1 is provided corresponding to the positive terminal of battery unit BU1. Similarly, relay SMRB2 is provided corresponding to the positive terminal of battery unit BU2. Relay SMRP2 for suppressing inrush current is preferably provided for relay SMRB2, as described above.

Relays CHR1-CHR3 are provided between charger 200 and power storage device 100. Relay CHR1 is provided between power line PL1 and power line BL1. Relay CHR2 is provided between power line PL2 and power line BL2. Further, relay CHR3 is provided between power line PL2 and intermediate node Nm.

Relays CHR1-CHR3, SMRG1 and SMRB2 correspond to "a plurality of open/close devices" directed to switching the electrical connection between power lines PL1, PL2 and a plurality of battery units BU1, BU2. The ON/OFF of each relay is under control of control device 50.

In the exemplified configuration of Fig. 9, battery units BU1 and BU2 in a running mode of the electric powered vehicle are basically connected to the traction system circuitry (Fig. 3) in a state connected in series with each other by relays SMRB1, SMRG1,SMRB2 and SMRG2 (SMRP2) in an ON state. In other words, electric power is supplied to the traction system circuitry from battery units BU1 and BU2 connected in series.

Therefore, in an external charging mode of power storage device 100, charging power is supplied basically from charger 200 to battery units BU1 and BU2 connected in series. Specifically, by setting relays CHR1, SMRG1, SMRB2 and CHR2 ON and setting relay CHR3 OFF, battery units BU1 and BU2 are charged (overall charging) by charger 200.

By setting relays CHR2 and SMRB2 OFF and setting relay CHR3 ON in addition to relays CHR1 and SMRG1, battery BU1 alone can be set as the subject of charging by charger 200. In other words, charger 200 can division-charge battery unit BU1.

During a running mode of the electric powered vehicle, battery unit BU1 alone can be connected to the traction system circuitry by setting relays CHR2 and CHR3 ON in addition to relays SMRB1, SMRG1 and SMRG2 (SMRP2), and setting relays SMRB2 and CHR1 OFF. In this case, although the output voltage of power storage device 100 becomes half as compared to the case where battery units BU1 and BU2 are connected in series, motor generator 20 can be drive-controlled by the boosted voltage through boost converter 15 shown in Fig. 3.

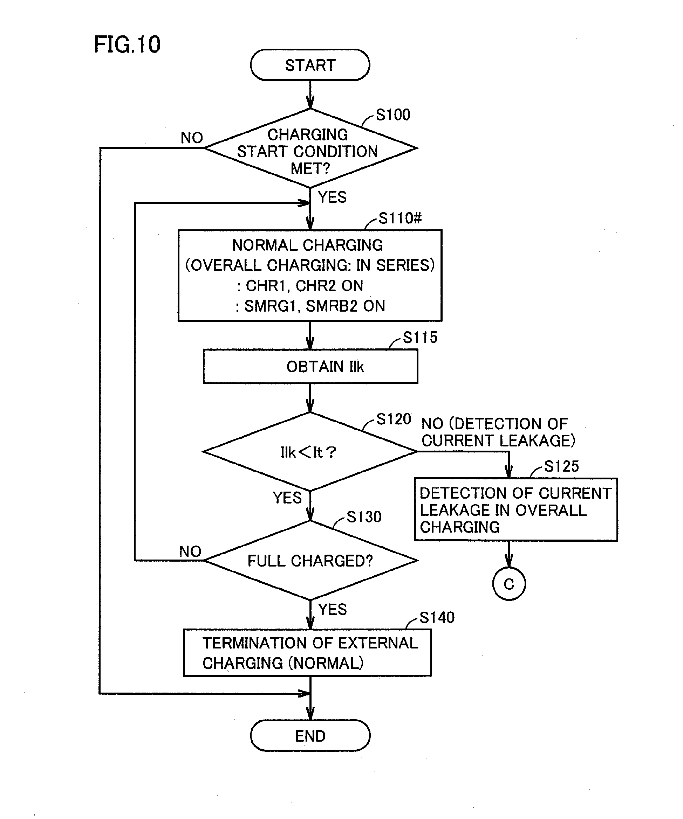

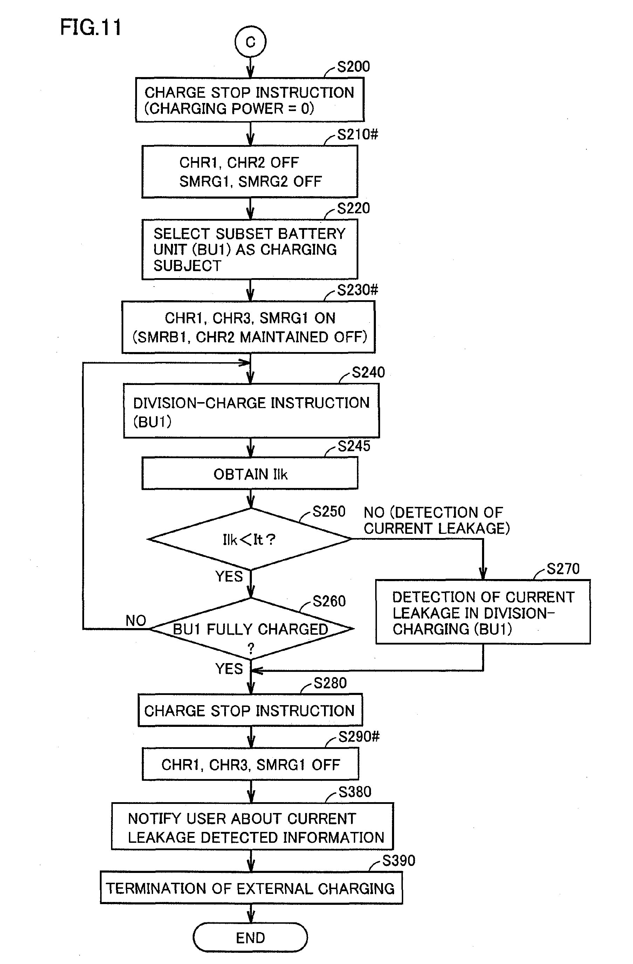

The control procedures for external charging of the power storage device shown in Fig. 9 will be described hereinafter with reference to Figs. 10 and 11. The series of control procedures according to the flowcharts of Figs. 10 and 11 is executed at a predetermined cycle by control device 50. It is assumed that the procedure of each step shown in Figs. 10 and 11 is executed by hardware and/or software processing through control device 50.

Referring to Fig. 10, control device 50 determines whether an external charging start condition is met or not through step S 100, likewise with that of Fig. 6. When a charging start condition is not met (NO determination at S100), external charging will not be executed since the subsequent steps are not executed.

When a charging start condition is met (YES determination at S100), control device 50 designates normal charging at step S110#. For example, in normal charging, the entirety of power storage device 100, i.e. both battery units BU1 and BU2, is taken as the subject of charging, and external-charged in series. The normal charging at step S110# is also referred to as "overall charging".

At step S110#, external charging is executed under the state where battery units BU1 and BU2 are electrically connected in series between power lines PL1 and PL2 by setting relays CHR1, CHR2 and relays SMRG1, SMRB2 ON.

Control device 50 compares current leakage value Ilk during external charging, detected by current leakage detection circuit 240, with a reference value It through steps S 115 and S120 similar to those of Fig. 6.

When current leakage value Ilk is lower than reference value It (YES determination at S120), control device 50 continues overall charging through step S110# until battery units BU1 and BU2 arrive at a full charged state (NO determination at S 130). When battery units BU1 and BU2 attain a full charged state (YES determination at S130), control device 50 terminates external charging normally at step S140.

In the case where current leakage value Ilk exceeds reference value It during overall charging (NO determination at S120), control device 50 detects current leakage in overall charging at step S125 similar to that of Fig. 6, and continues to execute the procedure shown in the flowchart of Fig. 11.

Referring to Fig. 11, control device 50 generates a charge stop instruction at step S200, likewise with Fig. 7. Further, control device 50 sets relays CHR1, CHR2 and relays SMRG1, SMRB2 OFF under the state where power output from charger 200 is stopped at step S210#. Accordingly, battery units BU1 and BU2 are electrically disconnected from power lines PL1 and PL2 temporarily.

Further, control device 50 selects battery unit BU1 that is the subset as the charging subject and prepares for charging thereof at step S220. In the example of the configuration of Fig. 9, battery unit BU1 is fixedly selected at step S220 since division-charging of battery unit BU2 is disabled.

At step S230#, control device 50 sets relays CHR1, CHR3 and relay SMRG1 ON and sets relays SMRB2, CHR2 OFF in order to connect battery unit BU1 that the charging subject between power lines BL1 and BL2.

Control device 50 proceeds to the procedure of step S240 likewise with Fig. 7 to generate a division-charge instruction with battery unit BU1 as the charging subject. Accordingly, charger 200 outputs charging power to charge battery unit BU1 alone under the state where battery unit BU1 is electrically connected to power lines PL1 and PL2.

Control device 50 division-charges battery unit BU1 through steps S240-S280, likewise with Fig. 7. Therefore, when current leakage value Ilk is lower than reference value It (YES determination at S250) and battery unit BU1 arrives at a full charged state (YES determination at S260), the charging of battery unit BU1 is stopped (S280).

When current leakage value Ilk exceeds a reference value It during division-charging (NO determination at S250), control device 50 detects current leakage in the charging of battery unit BU1 (S270), and immediately stops charging of battery unit BU1 (S280).

At the end of step S280, the division-charging of battery unit BU1 has ended either by being forced to stop due to detection of current leakage or by a normal stop as a result of full charging. Further, control device 50 turns OFF relays CHR1, CHR3 and SMRG1 that were ON in division-charging. Thus, all the relays are set OFF, and battery units BU1 and BU2 are electrically disconnected from power lines PL1 and PL2.

When the division-charging of battery unit BU1 ends, control device 50 notifies the user about information related to current leakage detection through step S380 likewise with Fig. 8. Accordingly, the user can obtain information about whether current leakage has been detected during external charging, and information indicating the battery unit whose charging has been completed at the end of external charging. Furthermore, control device 50 terminates external charging at step S390.

The procedure of step S200 in the flowchart of Figs. 10 and 11 can be omitted according to the status. In other words, the process of opening/closing the relay may be carried out to switch the battery unit that is to be charged while continuing charging in an external charging mode.

A power storage device of a configuration having a plurality of battery units connected in series as in the modification of the present embodiment may similarly continue external charging by division-charging with a subset of battery units as the charging subject even in the case where current leakage is great in normal overall charging. Accordingly, power storage device 100 can be charged appropriately by ensuring the charging opportunity of the battery unit while avoiding charging in a state where the current leakage is greater than the reference value in view of safety measures.

Although the example of Fig. 9 has been described based on a configuration in which battery unit BU1 alone can be division-charged, a configuration in which battery unit BU2 alone can be division-charged is allowed by modifying the arrangement of relays CHR1-CHR3. Alternatively, a configuration allowing division-charging of both battery units BU1 and BU2 is allowed by further arranging a relay between power line PL1 and intermediate node Nm relative to the configuration of Fig. 9.

In the present embodiment and modification thereof, an example of external charging of a power storage device based on a configuration having two battery units connected in parallel or in series has been described for the sake of convenience. The application of the present invention is not limited to such a configuration, and may be applied to external charging of a power storage device including three or more battery units. In other words, in the case where the current leakage value is greater than a reference value when all or a subset of a plurality of battery units is taken as the charging subject, transition to division-charging with fewer battery units as the charging subject is allowed to execute external charging. By effecting control to modify the number of battery units that are the subject of charging according to the current leakage value Ilk in an external charging mode, the above-described advantage can be achieved in a similar manner.

It should be understood that the embodiments disclosed herein are illustrative and non-restrictive in every respect. The scope of the present invention is defined by the terms of the claims, rather than the description set forth above, and is intended to include any modifications within the scope and meaning equivalent of the terms of the claims.

### INDUSTRIAL APPLICABILITY

The present invention can be employed in a charging system of an electric powered vehicle to charge a vehicle-mounted power storage device by electric power from a power supply external to the vehicle.

### REFERENCE SIGNS LIST

10 power control unit; 15 boost converter; 17 inverter; 20 motor generator; 21 neutral point; 30 power transmission gear; 40 driving wheel; 50 control device (ECU); 60 vehicle earth; 100 power storage device; 180 charging inlet; 183-185 electrode; 200 charger; 210 AC filter; 220 AC/DC converter; 225 DC/DC converter; 230 AC port; 231 DFR; 235 voltage sensor; 236 current sensor; 240 current leakage detection circuit; 241 insulation resistance tester; 242 connection unit; 246 flux concentrating core; 247 coil; 248 current detector; 300 charge cable; 310 connector; 320 plug; 330 CCID; 400 plug socket; 402 external power supply; ACLn, ACLp, BL1, BL2, PL1-PL6, PSLp, PSLn power line; BU1, BU2 power storage unit (battery unit); Co, Ca, Cb smoothing capacitor; C1, C2, C3 earth capacitance; CHR1-CHR3, SMRB1, SMRB2, SMRG1, SMRG2, SMRP1, SMRP2 relay; CPLT pilot signal; D1-D6 anti-parallel diode; Ilk current leakage value; L1 reactor; LN1, LN2 signal line; Nm intermediate node; PISW signal; Q1-Q6 power semiconductor switching element; Vdc charging voltage.

## Claims

1. A charging system of an electric powered vehicle incorporating a traction electric motor (20), comprising:
a power storage device (100) configured to include a plurality of power storage units (BU1, BU2) for storing electric power to be supplied to said traction electric motor,
first and second power lines (PL1, PL2) to which charging power for charging said power storage device is supplied,
a plurality of open/close devices (SMRB1, SMRB2, SMRG1, SMRG2, SMRP1, SMRP2, CHR1-CHR3) for switching electrical connection between said first and second power lines and said plurality of power storage units,
a detector (240) for detecting current leakage during charging of said power storage device, and
a control unit (50) for controlling said plurality of open/close devices to modify the number of power storage unit(s) connected to said first and second power lines among said plurality of power storage units, according to a current leakage detection value (Ilk) by said detector during charging of said power storage device.

2. The charging system of an electric powered vehicle according to claim 1, wherein said control unit (50) controls said plurality of open/close devices (SMRB1, SMRB2, SMRG1, SMRG2, SMRP1, SMRP2, CHR1-CHR3) to attain, when said current leakage detection value (Ilk) exceeds a reference value during charging of said power storage device (100) under a first state where a first number of power storage units among said plurality of power storage units (BU1, BU2) are electrically connected to said first and second power lines (PL1, PL2), a second state where a second number of power storage unit(s), fewer than said first number, is/are electrically connected to said first and second power lines, and charges said power storage device under said second state.

3. The charging system of an electric powered vehicle according to claim 1, wherein said control unit (50) controls said plurality of open/close devices (SMRB1, SMRB2, SMRG1, SMRG2, SMRP1, SMRP2, CHR1-CHR3) to attain, when said current leakage detection value (Ilk) exceeds a reference value (It) during charging of said power storage device (100) under a first state where all of said power storage units (BU1, BU2) are electrically connected to said first and second power lines (PL1, PL2), a second state where a subset of said plurality of power storage unit is electrically connected to said first and second power lines, and charges said power storage device under said second state.

4. The charging system of an electric powered vehicle according to claim 2 or 3, wherein said control unit (50) controls said plurality of open/close devices (SMRB1, SMRB2, SMRG1, SMRG2, SMRP1, SMRP2, CHR1-CHR3) to change from said first state to said second state after the charging power of said power storage device (100) is set to zero under said first state.

5. The charging system of an electric powered vehicle according to claim 2 or 3, further comprising a charger (200) for converting electric power from a power supply (402) external to said electric powered vehicle into the charging power of said power storage device (100) for output onto said first and second power lines, wherein
said plurality of power storage units (BU1, BU2) are electrically connected in parallel with said first and second power lines (PL1, PL2) under said first state, and
an output voltage of said charger is equal in said first and second states.

6. The charging system of an electric powered vehicle according to claim 2 or 3, further comprising a charger (200) for converting electric power from a power supply (402) external to said electric powered vehicle into the charging power of said power storage device (100) for output onto said first and second power lines, wherein
said plurality of power storage units (BU1, BU2) are electrically connected in series with said first and second power lines (PL1, PL2) under said first state, and
an output voltage of said charger under said second state is lower than the output voltage from said charger under said first state.

7. The charging system of an electric powered vehicle according to any one of claims 1-3, further comprising a charger (200) converting electric power from a power supply (402) external to said electric powered vehicle into the charging power of said power storage device (100) for output onto said first and second power lines,
wherein said charger is constituted of a non-insulation type power converter.

8. The charging system of an electric powered vehicle according to any one of claim 1-3, further comprising:
a power control unit (10) for executing power conversion between said traction electric motor (20) and said power storage device (100) of said electric powered vehicle, and
a charger (200) for converting electric power from a power supply (402) external to said electric powered vehicle into the charging power of said power storage device for output onto said first and second power lines (PL1, PL2),
wherein said charger is at least partially configured sharing circuitry with said power control unit.

9. A method for controlling charging of an electric powered vehicle incorporating a traction electric motor (20) and a power storage device (100) for storing electric power to be supplied to said traction electric motor,
said power storage device configured to include a plurality of power storage units (BU1, BU2),
said charging control method comprising the steps of:
detecting (S115) current leakage during charging of said power storage device, and
charging (S230, S230#, S240, S310, S320) said power storage device having modified the number of power storage units connected to first and second power lines (PL1, PL2) to which charging power for charging said power storage device is supplied, according to a detected current leakage detection value (Ilk).

10. The method for controlling charging of an electric powered vehicle according to claim 9, wherein
in said detecting step (S115), said current leakage detection value (Ilk) is detected during charging under a first state where a first number of power storage units among said plurality of power storage units (BU1, BU2) are electrically connected to said first and second power lines (PL1, PL2), and
in said charging step (S230, S230#, S240, S310, S320), when said current leakage detection value exceeds a reference value under said first state, said power storage device (100) is charged under a second state where a second number of power storage unit(s), fewer than said first number, is/are electrically connected to said first and second power lines.

11. The method for controlling charging of an electric powered vehicle according to 9, wherein
in said detecting step (S115), said current leakage detection value (Ilk) is detected during charging under a first state where all said plurality of power storage units (BU1, BU2) are electrically connected to said first and second power lines (PL1, PL2), and
in said charging step (S230, S230#, S240, S310, S320), when said current leakage detection value under said first state exceeds a reference value (It), said power storage device (100) is charged under a second state where a subset of said plurality of power storage units is electrically connected to said first and second power lines.

12. The method for controlling charging of an electric powered vehicle according to claim 10 or 11, further comprising the step (S200) of setting the charging power of said power storage device (100) at zero, prior to switching connection between said plurality of power storage units (BU1, BU2) and said first and second power lines (PL1, PL2) so as to change from said first state to said second state.
